# EUROPÄISCHE PATENTSCHRIFT

(11) **EP 0 742 176 B1**
(45) Veröffentlichungstag und Bekanntmachung des Hinweises auf die Patenterteilung: **03.09.1997**
(21) Anmeldenummer: 96105687.6
(22) Anmeldetag: 11.04.1996
(51) Int. Cl.: C02F 1/50

(54) **Verfahren zur algiziden Behandlung von Wasser**
Water treatment with algicides
Procédé de traitement de l'eau avec des algicides

(30) Priorität: 12.05.1995 DE 19517463
(43) Veröffentlichungstag der Anmeldung: 13.11.1996
(73) Patentinhaber: Degussa Aktiengesellschaft, 60311 Frankfurt (DE)
(72) Erfinder: Werle, Peter, Dr., 63571 Gelnhausen (DE); Holinej, Jolanta, 63512 Hainburg (DE); Rückriegel, Antje, 63589 Linsengericht (DE)

(56) Entgegenhaltungen:
- Keine einschlägigen Dokumente gefunden

## Beschreibung

Die Erfindung richtet sich auf ein Verfahren zur algiziden Behandlung von Wasser, insbesondere Schwimmbadwasser.

Während es für die technische Wasserbehandlung eine Vielzahl von biologisch aktiv wirkenden Substanzen gibt, beschränkt sich die Pflege von Schwimmbeckenwässern im privaten Bereich im wesentlichen auf halogenabspaltende Mittel oder auf polymere Biguanidine in Kombination mit sauerstoffabspaltenden Präparaten.

Einige Nachteile chlorabspaltender Stoffe, wie Chlorbleichlauge oder Calciumhypochlorit, etwa die pH-Wert-Erhöhung, der hohe Chlorverlust durch UV-Zehrung sowie häufige Inspektionen, lassen sich durch die Verwendung von chlorierten Isocyanuraten beseitigen, trotzdem bleiben auch hiermit gewisse chlorspezifische Nachteile, wie Schleimhautreizungen, oxidierende Wirkung auf Metalle, geringe Chlorkonzentration in den obersten Wasserschichten sowie eine Anreicherung von Cyanursäure im Becken erhalten. Darüber hinaus ist mit dem Auftreten resistenter Algen zu rechnen.

Polyhexamethylenbiguanid (=Poly(iminocarboimidoylimino-carboimidoylimino-1,6-hexan-diyl)hydrochlorid) wird seit einigen Jahren als aktivchlorfreies Produkt zur Schwimmbadpflege verwendet (z. B. GB 1 407 258). Da dieses Polymer keine oxidative Wirkung besitzt, wird, sofern der Gehalt an organischen Stoffen in Wasser begrenzt oder reduziert werden soll, zusätzlich ein Oxidationsmittel verwendet. Da das polymere Biguanid mit aktivem Chlor nicht verträglich ist, kommen hierfür nur Aktivsauerstoffverbindungen infrage, etwa Perborate (DE-OS 28 26 019) oder Persulfate. Nachteilig bei der Verwendung des polymeren Biguanids ist die bei längerem Gebrauch auftretende Bildung von schleimigen Partikeln im Wasser, die Siebe und Filter in ihrer Funktion behindern können und optisch störend auf den Badenden wirken. Außerdem ist nach längerem Gebrauch die algizide Wirkung nicht ausreichend, so daß ein erhöhter Einsatz von Wasserstoffperoxid oder Persalzen notwendig wird.

Aufgabe der Erfindung war demgemäß, ein verbessertes Verfahren zur algiziden Behandlung von Wasser, insbesondere Schwimmbadwasser, aufzuzeigen, das die Nachteile der bisher für diesen Zweck verwendeten Mittel nicht oder zumindest in vermindertem Umfang aufweist.

Gelöst wird diese Aufgabe dadurch, daß man als Algizid Chorhexidin oder ein Salz desselben verwendet.

Chlorhexidin (=1,1'Hexamethylen-bis[5-(4-chlorphenyl)biguanid]) ist seit langem als breitwirkendes antibakterielles Desinfektionsmittel im Human- und Tierbereich bekannt. Obgleich Chlorhexidin als möglicher Behandteil mikrobiozider Mittel, worunter meist pauschal Mittel zum Abtöten oder zur Hemmung des Wachstums von Mikroorganismen, wie Bakterien, Pilzen und Algen, verstanden werden, erwähnt worden ist - siehe EP-A 0 425 016 und EP-A 0 259 249 -, ist die Verwendung von Chlorhexidin als Algizid für die Wasserbehandlung bisher nicht beschrieben worden. Es wurde nun überraschenderweise gefunden, daß Chlorhexidin und seine Salze eine sehr hohe Aktivität gegen Algen aller Art aufweisen und damit zu den effektivsten Algiziden gerechnet werden können.

Außer Chlorhexidin können Salze desselben, insbesondere wasserlösliche Salze, verwendet werden. Die Chlorhexidinbase wird zweckmäßigerweise in Form einer Lösung in Alkoholen oder Glykolen eingesetzt. Bevorzugt wird die Verwendung eines wasserlöslichen handelsüblichen Chlorhexidinsalzes, etwa des Lactats oder Gluconats. Diese wasserlöslichen Salze können in fester Form oder als wäßrige Lösung eingesetzt werden. Bevorzugt wird eine 1 bis 20 gew.-%ige Chlorhexidingluconatlösung. Alternativ können schwerer lösliche Salze, wie Chlorid oder Acetat, auch in fester Form, als Pulver, Granulat oder Tabletten, dem zu behandelnden Wasser zugesetzt werden.

Die Einsatzkonzentration richtet sich nach dem Zweck und den speziellen Anforderungen. Bereits eine Menge von 0,1 ppm (parts per million), also 0,1 g Chlorhexidin pro m³ Wasser, ist hochwirksam. Eine Menge von 10 ppm wird in der Praxis kaum überschritten werden müssen. Vorzugsweise werden Chlorhexidin oder ein Salz davon in einer Menge von 0,1 bis 3 ppm, jeweils berechnet als Chlorhexidin, verwendet.

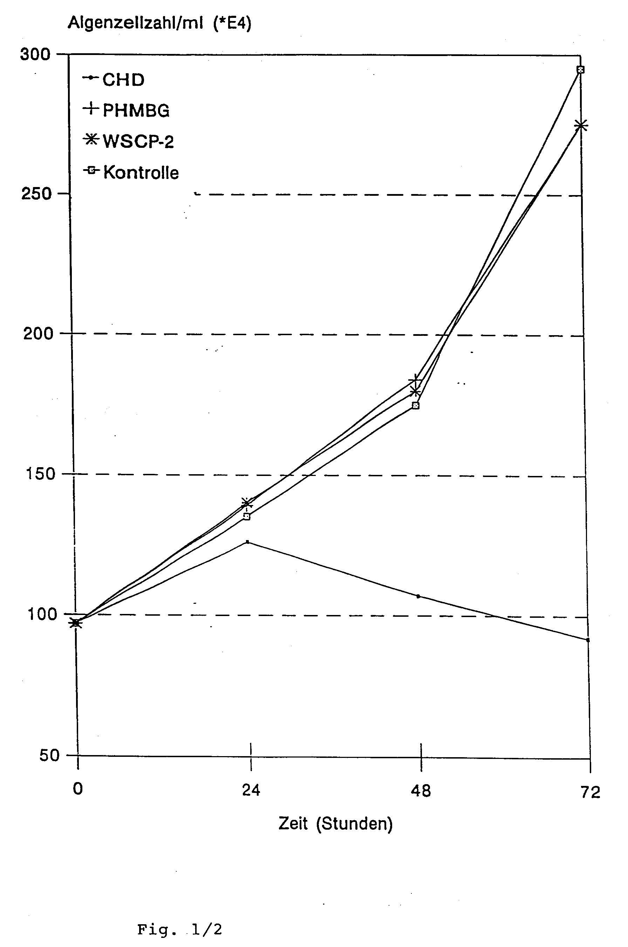

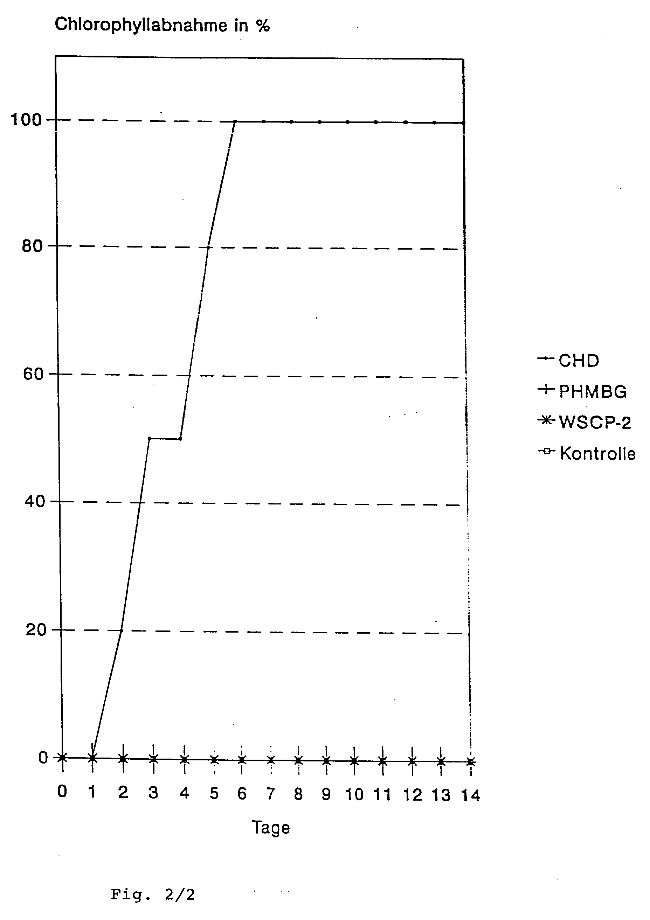

Figur 1/2 zeigt die Algenzellenzahl in Abhängigkeit von der Inkubationszeit bei Blaualgen bei einer Wirkstoffkonzentration von je 0,1 ppm Chlorhexidin (CHD), Polyhexamethylenbiguanid (PAMBG) und WSCP-2 (siehe Beispiel 1). Die außergewöhnlich hohe algizide Wirkung (=Wachstumshemmung) folgt auf der Kurve für CHD im Vergleich zu den anderen Stoffen.

Figur 2/2 zeigt die Chlorophyllabnahme im Suspensionstest innerhalb von 14 Tagen am Beispiel der Grünalge bei einer Wirkstoffkonzentration von jeweils 1 ppm CHD, PHMBG und WSCP-2 - siehe Beispiel 3. Während mit CHD (1 ppm) innerhalb von 5 Tagen der Chlorophyllgehalt um 100 % abnimmt, zeigen die Vergleichssubstanzen bei der gleichen Wirkstoffkonzentration keine Wirkung.

Zur algiziden Behandlung von Wasser können Chlorhexidin oder ein Salz davon allein oder in Kombination mit anderen Algiziden und/oder anderweitig mikrobioziden, etwa bakteriziden, viruziden und fungiziden, Wirkstoffen verwendet werden.

Beispielsweise sind Kombinationen aus Chlorhexidin oder einem Salz davon mit einer algizid wirksamen polymeren Guanidinverbindung, insbesondere Polyhexamethylenbiguanid, sehr wirksam. Durch eine solche Kombination lassen sich die Einsatzmengen des genannten Biguanids - bei alleiniger Verwendung (also ohne Chlorhexidin) um/über 10 ppm - nennenswert reduzieren, so daß die einleitend genannten Nachteile gemindert werden; gegebenenfalls auftretende Trübungen lösen sich bei ausreichender Verdünnung mit dem zu behandelnden Wasser wieder auf.

Chlorhexidin und dessen Salze lassen sich auch sowohl mit Aktivsauerstoffverbindungen, insbesondere Wasserstoffperoxid, Wasserstoffperoxid freisetzende Verbindungen sowie Peressigsäure, als auch Aktivchlorverbindungen, insbesondere Chlor und chlorierte Isocyanurate, kombinieren. Damit sind die Voraussetzungen gegeben, das Wasser auch bei langem Gebrauch klarzuhalten. Selbst bei sehr ungünstigen Wasserverhältnissen oder vorbeugend zur Reduktion organischer Materie ist eine Stoßchlorierung möglich, ohne daß Verfärbungen oder Trübungen im Wasser auftreten. Die Kombination von Chlorhexidin oder einem Salz davon mit Wasserstoffperoxid ist besonders vorteilhaft, weil hier gegenüber der Kombination PHMBG/H₂O₂ eine geringere Einsatzmenge H₂O₂ nötig ist.

Die Verwendung von Chlorhexidin und Chlorhexidinsalzen als Algizid bei der Wasserbehandlung zeichnet sich durch die außergewöhnlich hohe algizide Wirksamkeit und damit die sehr niedrige Dosiermenge und das breite Wirkungsspektrum gegen alle Algen und zusätzlich andere Mikroorganismen aus. Weitere Vorteile sind die gute Verträglichkeit mit anderen Algiziden sowie Aktivsauerstoff- und Aktivchlorverbindungen. Die Ausbildung von Trübungen und Schleim wird ganz oder weitgehend vermieden. Schließlich sind Chlorhexidin und seine Salze physiologisch unbedenklich, insbesondere nicht hautreizend, so daß sie zur Anwendung in privaten und öffentlichen Schwimmbädern besonders geeignet sind.

### Beispiel 1 und 2

### Bestimmung der Algenwachstumshemmung

Die Zellen einer Algenspezies wurden über mehrere Generationen in einem definierten Medium kultiviert. Das Algizid wurde in verschiedenen Konzentrationen eingesetzt. Getestet wurde Chlorhexidin (=CHD) im Vergleich zu Polyhexamethylenbiguanid (=PHMBG) und Poly(hydroxyethylendimethylimino-ethylen-dimethylimino-methylendichlorid) (=WSCP-2; Firma Buckman Laboratories, Bad Homburg) sowie einer algizidfreien Kontrolle. Chlorhexidin wurde in allen Beispielen (Beispiele 1 bis 6) als 20 gew.-%ige Chlorhexidingluconatlösung eingesetzt.

Der Testansatz wurde hergestellt durch Mischen entsprechender Mengen an Nährlösungskonzentrat, Wasser, Stammlösung der Testsubstanz und Impfmaterial einer exponentiell wachsenden Algenkultur. Die im Test eingesetzten Gattungen findet man an jedem nur denkbaren Standort, nämlich auf Erde, an feuchten Blumentöpfen, in stehenden und fließenden Gewässern, an feuchten Felsen und sogar in der Luft. Die Spezies wurden von dem Pflanzenphysiologischen Institut der Universität Göttingen bezogen.

Die Testansätze wurden über eine Mindestdauer von 72 h inkubiert, während der die Zellzahl alle 24 h bestimmt wurde.

Die Hemmung wurde gemessen als Verminderung des Wachstums im Verhältnis zu einer unter identischen Bedingungen gewachsenen Kontrollkultur.

Die folgenden Tabellen zeigen die Wachstumshemmung bei Blaualgen (=Beispiel 1) und Grünalgen (=Beispiel 2) in Gegenwart von CHD (a), PHMBG (b) und WSCP-2 (c) bei verschiedenen Konzentrationen sowie in Abwesenheit eines Algizids (Kontrolle).

### Beispiel 1: Blaualge

a)
- Wirkstoff:: CHD
- Algenspezies:: Synechocystis minuscula
- pH-Wert:: 9,0

| Konz. (ppm) | Zellzahl/ml nach Einwirkzeit (^{·}10⁴) | | | |
|---|---|---|---|---|
| | 0 h | 24 h | 48 h | 72 h |
| 0,05 | 97 | 135 | 140 | 133 |
| 0,1 | 97 | 126 | 107 | 92 |
| 0,25 | 97 | 125 | 105 | 90 |
| 0,5 | 97 | 110 | 86 | 85 |
| 1,0 | 97 | 106 | 92 | 91 |
| 2,5 | 97 | 105 | 93 | 93 |
| Kontrolle | 97 | 135 | 175 | 295 |

b)
- Wirkstoff:: PHMBG
- Algenspezies:: S. minuscula
- pH-Wert:: 9,0

| Konz. (ppm) | Zellzahl/ml nach Einwirkzeit (^{·}10⁴) | | | |
|---|---|---|---|---|
| | 0 h | 24 h | 48 h | 72 h |
| 0,05 | 97 | 140 | 185 | 300 |
| 0,1 | 97 | 139 | 184 | 275 |
| 0,25 | 97 | 115 | 92 | 85 |
| 0,5 | 97 | 94 | 86 | 85 |
| 1,0 | 97 | 93 | 86 | 91 |
| 2,5 | 97 | 80 | 80 | 84 |
| Kontrolle | 97 | 135 | 175 | 295 |

c)
- Wirkstoff:: WSCP-2
- Algenspezies:: S. minuscula
- pH-Wert:: 9,0

| Konz. (ppm) | Zellzahl/ml nach Einwirkzeit (^{·}10⁴) | | | |
|---|---|---|---|---|
| | 0 h | 24 h | 48 h | 72 h |
| 0,1 | 97 | 140 | 180 | 275 |
| 0,25 | 97 | 141 | 183 | 286 |
| 0,5 | 97 | 142 | 195 | 330 |
| 1,0 | 97 | 130 | 148 | 190 |
| 2,5 | 97 | 130 | 154 | 210 |
| Kontrolle | 97 | 135 | 175 | 295 |

### Beispiel 2: Grünalge

a)
- Wirkstoff:: CHD
- Algenspezies:: Scenedesmus subspicatus
- pH-Wert:: 8,0

| Konz. (ppm) | Zellzahl/ml nach Einwirkzeit (^{·}10⁴) | | | |
|---|---|---|---|---|
| | 0 h | 24 h | 48 h | 72 h |
| 0,025 | 8,0 | 15 | 19 | 24 |
| 0,05 | 8,0 | 16 | 18 | 15 |
| 0,1 | 8,0 | 15 | 15 | 13 |
| 0,25 | 8,0 | 14 | 14 | 11 |
| 0,5 | 8,0 | 12 | 13 | 10 |
| Kontrolle | 8,0 | 21 | 74 | 126 |

b)
- Wirkstoff:: PHMBG
- Algenspezies:: S. subspicatus

| Konz. (ppm) | Zellzahl/ml nach Einwirkzeit (^{·}10⁴) | | | |
|---|---|---|---|---|
| | 0 h | 24 h | 48 h | 72 h |
| 0,025 | 8,0 | 16 | 44 | 79 |
| 0,05 | 8,0 | 17 | 42 | 84 |
| 0,1 | 8,0 | 17 | 27 | 59 |
| 0,25 | 8,0 | 16 | 17 | 12 |
| 0,5 | 8,0 | 10 | 7,0 | 6,0 |
| Kontrolle | 8,0 | 21 | 74 | 126 |

c)
- Wirkstoff:: WSCP-2
- Algenspezies:: S. subspicatus

| Konz. (ppm) | Zellzahl/ml nach Einwirkzeit (^{·}10⁴) | | | |
|---|---|---|---|---|
| | 0 h | 24 h | 48 h | 72 h |
| 0,025 | 8,0 | 16 | 68 | 149 |
| 0,05 | 8,0 | 18 | 68 | 191 |
| 0,1 | 8,0 | 8,0 | 36 | 98 |
| 0,25 | 8,0 | 12 | 40 | 140 |
| 0,5 | 8,0 | 8,0 | 14 | 12 |
| Kontrolle | 8,0 | 21 | 74 | 126 |

### Beispiel 3

### Bestimmung der algiziden Wirksamkeit im Suspensionstest

### Durchführung:

Die Zellen der Algenspezies wurden auf Schrägagarröhrchen mehrere Tage kultiviert und für den Test mittels definiertem Medium abgespült.

Das Testgut wurde hergestellt durch Mischen entsprechender Mengen an Nährlösung, Wasser, Stammlösung der Testsubstanz und Impfmaterial der Algenkultur.

Die Testansätze wurden 14 Tage bei Raumtemperatur unter Belichtung (jeweils 24 Stunden/Tag (=h/d)) inkubiert und täglich visuell im Vergleich zu den Kontrollkulturen beurteilt.

Aus den folgenden Tabellen sind die Wirkungsbreite und Wirkungsintensität der geprüften Wirkstoffe ersichtlich. Zu Vergleichszwecken sind jene Konzentrationen von CHD, PHMBG und WSCP, die bei den Algenspezies gleiche Wirkung zeigten, mit einem (W) gekennzeichnet. Figur 2/2 zeigt die Wirkung bei 1 ppm Wirkstoff der 3 Substanzen innerhalb von 14 Tagen am Beispiel der Grünalge.

| Bewertungsskala | % |
|---|---|
| - : Zerstörung des Chlorophylls | 100 |
| (+) : noch Chlorophyll sichtbar | 80 |
| + : deutliches Chlorophyll | 50 |
| ++ : kräftiges Chlorophyll | 20 |
| +++ : Chlorophyll wie Kontrolle | 0 |

a)
- Wirkstoff:: CHD

| Algenspezies | pH | Konz. (ppm) | Bewertung |
|---|---|---|---|
| S. minuscula (Blaualge) | 7,2 | 1,0 (W) | - 5 Tage |
| | 7,2 | 2,5 | - 5 Tage |
| | 7,2 | 5,0 | - 5 Tage |
| S. subspicatus (Grünalge) | 10,2 | 1,0 (W) | - 3 Tage |
| | 10,2 | 2,5 | - 3 Tage |
| | 10,2 | 5,0 | - 3 Tage |
| Chlorella vulgaris (Grünalge) | 7,2 | 1,0 (W) | - 6 Tage |
| | 7,2 | 2,5 | - 5 Tage |
| | 7,2 | 5,0 | - 5 Tage |

b)
- Wirkstoff:: PHMBG

| Algenspezies | pH | Konz. (ppm) | Bewertung |
|---|---|---|---|
| S. minuscula (Blaualge) | 9,4 | 1,0 | +++ 14 Tage |
| | 9,4 | 2,5 | ++ 14 Tage |
| | 9,4 | 5,0 | - 8 Tage |
| | 9,4 | 10,0 (W) | - 4 Tage |
| S. subspicatus (Grünalge) | 10,2 | 1,0 | ++ 2 Tage |
| | 10,2 | 2,5 | - 10 Tage |
| | 10,2 | 5,0 (W) | - 3 Tage |
| Chlorella vulgaris (Grünalge) | 7,2 | 1,0 | ++ 2 Tage |
| | 7,2 | 2,5 | (+) 10 Tage |
| | 7,2 | 5,0 (W) | - 2 Tage |

c)
- Wirkstoff:: WSCP-2

| Algenspezies | pH | Konz. (ppm) | Bewertung |
|---|---|---|---|
| S. minuscula (Blaualge) | 7,2 | 1,0 | +++ 14 Tage |
| | 7,2 | 2,5 | +++ 14 Tage |
| | 7,2 | 5,0 | (+) 5 Tage |
| | 7,2 | 10,0 (W) | - 4 Tage |
| S. subspicatus (Grünalge) | 10,2 | 1,0 | ++ 2 Tage |
| | 10,2 | 2,5 | - 3 Tage |
| | 10,2 | 5,0 (W) | - 3 Tage |
| Chlorella vulgaris (Grünalge) | 7,2 | 1,0 | +++ 14 Tage |
| | 7,2 | 2,5 | + 9 Tage |
| | 7,2 | 5,0 (W) | - 5 Tage |

### Beispiel 4

### Bestimmung der algiziden Wirksamkeit im Suspensionstest mit einer Problemalgenmischkultur aus einem Schwimmbadwasser

Die Algenmischung wurde unter Laborbedingungen angezogen. Die Durchführung erfolgte wie in Beispiel 3 beschrieben. Als Algizid wurden 10 ppm Chlorhexidin eingesetzt.

Ergebnis: Zerstörung des gesamten Chlorophylls nach 4 Tagen; Farbumschlag des Wassers von grün auf farblos. Im weiteren Testverlauf keine Veränderungen mehr erkennbar, d. h. keine Zellteilung der Algen mehr sichtbar.

### Beispiel 5

### Versuch an einem Testbecken (15 m³)

- Aussehen des Wassers:: grünlich, leicht trüb (gutes Algenwachstum erkennbar)
- Zugabe:: 3 ppm Chlorhexidin
- Aussehen nach 2 Tagen:: wasserklar
- Aussehen nach 1 Woche:: wasserklar
- Aussehen nach 2 Wochen:: wasserklar
- Aussehen nach 3 Wochen:: leichtes Algenwachstum erkennbar.

### Beispiel 6

### Algizide Behandlung eines Schwimmbads (600 m³) zur Überwinterung mittels einmaliger Zugabe von Chlorhexidin

- Aussehen des Wassers:: leicht grün, trüb
- Zugabemenge:: 10 ppm Chlorhexidin
- Aussehen nach 15 Tagen:: sauber, klar, kein Algenwachstum erkennbar.

Die Reinigung des Beckens nach der Überwinterung war sehr leicht durchführbar; der Kachelbelag konnte leicht abgelöst werden.

## Patentansprüche

1. Verfahren zur algiziden Behandlung von Wasser,
dadurch gekennzeichnet,
daß man als Algizid Chlorhexidin oder ein Salz desselben verwendet.

2. Verfahren nach Anspruch 1,
dadurch gekennzeichnet,
daß man Chlorhexidin oder ein Salz desselben in einer Menge von 0,1 bis 10 ppm, vorzugsweise 0,1 bis 3 ppm, jeweils berechnet als Chlorhexidin, verwendet.

3. Verfahren nach Anspruch 1 oder 2,
dadurch gekennzeichnet,
daß man Chlorhexidin oder ein Salz desselben in Kombination mit einer Aktivsauerstoffverbindung oder Aktivchlorverbindung verwendet.

4. Verfahren nach einem der Ansprüche 1 bis 3,
dadurch gekennzeichnet,
daß man zusätzlich eine algizid wirksame polymere Guanidinverbindung verwendet.

## Claims

1. Process for the treatment of water with algicides,
characterised in that chlorhexidine or a salt thereof is used as algicide.

2. Process according to claim 1,
characterised in that chlorhexidine or a salt thereof is used in a quantity of from 0.1 to 10 ppm, preferably 0.1 to 3 ppm, in each case calculated as chlorhexidine.

3. Process according to claim 1 or 2,
characterised in that chlorhexidine or a salt thereof is used in combination with an active oxygen compound or active chlorine compound.

4. Process according to any one of claims 1 to 3,
characterised in that in addition an algicidally active polymeric guanidine compound is used.

## Revendications

1. Procédé de traitement de l'eau par des algicides,
caractérisé en ce qu'
on utilise comme algicide, de la chlorhexidine ou un de ses sels.

2. Procédé selon la revendication 1,
caractérisé en ce qu'
on utilise la chlorhexidine ou un de ses sels en une quantité allant de 0,1 à 10 ppm de préférence de 0,1 à 3 ppm, à chaque fois calculé en tant que chlorhexidine.

3. Procédé selon la revendication 1 ou 2,
caractérisé en ce qu'
on utilise la chlorhexidine ou un de ses sels en combinaison avec un composé à oxygène actif ou un composé à chlore actif.

4. Procédé selon l'une des revendications 1 à 3,
caractérisé en ce qu'
on utilise en supplément un dérivé de guanidine polymère, actif comme algicide.
